# EUROPEAN PATENT SPECIFICATION

(11) **EP 2 295 235 B1**
(45) Date of publication and mention of the grant of the patent: **03.07.2013**
(21) Application number: 09010467.0
(22) Date of filing: 20.08.2009
(51) Int. Cl.: B32B 5/02, F03D 1/06

(54) **Fiber reinforced plastic-structure and a method to produce the fiber reinforced plastic-structure**
Faserverstärkte Kunststoffstruktur und Verfahren zur Herstellung der faserverstärkten Kunststoffstruktur
Structure plastique renforcée à fibre et procédé pour produire la structure plastique renforcée à fibre

(43) Date of publication of application: 16.03.2011
(73) Proprietor: Siemens Aktiengesellschaft, 80333 München (DE)
(72) Inventor: Grove-Nielsen, Erik, Vile 7870 Roslev (DK)

(56) References cited:
- EP-A- 1 162 058
- WO-A-2007/098769
- DE-C1- 10 203 975
- KR-B1- 100 759 595
- US-A1- 2009 189 320

## Description

The invention relates to a fiber reinforced plastic-structure and to a method to produce the fiber reinforced plastic-structure, while at least two elements are used to build up the shape of the fiber reinforced plastic-structure.

It is known to build up a wind-turbine-blade for example by the use of fiber-reinforced laminates. The fiber-reinforced laminates may consist of chopped strand mats (CSM) or of woven fabric mats (like multi-axis interlaid scrims), of warp-thread reinforced unidirectional performs, of single or joined roving bundles and of any known fiber-material like glass, Kevlar, carbon or hemp.

The fiber-reinforcement may be supplemented with pre-fabricated components. For example fiberglass inserts, pultruded rods, ..., etc.

The fiber-reinforcement may even be combined with sandwich core materials like balsa wood, foam or honeycomb.

A wind-turbine-blade is built up by a number of layers in a so called laminate stack. The structure comprises piled up plastic-laminates, pre-casted components or elements or other fiber reinforced plastic-structures.

A lower mould is used to carry the main blade-structure, while an upper mould is used to enclose the three-dimensional structure of the blade, together with the lower mould. The connected moulds are evacuated by air while a liquid matrix material (like resin) is subsequently infused into the mould.

The resin cures out, while this process is achieved by applying pressure and temperature to the enclosed structure. This kind of process is called "Vacuum Assisted Resin Transfer Method, VARTM".

A fiber reinforced plastic-structure comprises single elements. These single elements may comprise fiber-reinforced laminates, pieces of balsa-wood and/or other pre-casted elements. The single elements need to be connected.

For the connection the single elements are arranged into a desired shape and are connected by help of glue, which is applied to contact-surfaces of adjacent elements.

It is possible to connect the single elements by using the VARTM, while resin is used as matrix-material.

It is also possible to use glue to connect the single elements.

If the elements are connected by resin or glue a resulting bond-connection shows only a low so called "Inter Laminar Shear Strength Value, ILSS-value".

This is especially the case if the contact-surfaces of the elements are smooth.

Often a so called "Shear Fracture" occurs between the smooth surfaces, so a fracture propagates along a resulting glue-line. This is weakening the resulting structure.

To reduce this effect it is known to use a glue, which contains a filler. For example a so called "Mineral Filler" or a "Needle Shape Filler" is used.

This kind of glue is based on a two component epoxy or is based on a polyurethane system. It is also possible to base it on unsaturated polyester, to which a curing agent is added.

One disadvantage of this filler-based glue is, that its application is done in the shape of a glue-paste. This often creates voids and air bubbles along the glue line, leading to a crack formation.

Often a glue-paste will result in a brittle glue-line and in a glue line, which shows cracks.

KR 10-0759595B1 discloses a method for manufacturing a carbon-glass fiber hybrid composite for a wind turbine blade. The method is provided to increase rigidity and strength by aligning carbon fibers in the center of the carbon-glass fiber hybrid composite and to decrease the density by 10%. The method comprises the steps of: treating glass fiber and carbon fiber with a releasing agent by VARTM(Vacuum Assisted Resin Transfer Molding) and forming the composite by positioning the carbon fiber in a middle layer and stacking the glass fiber on upper and lower layers in the same thickness on a dried mold.

It is the aim of the invention, to provide an improved fiber reinforced plastic-structure and a method to produce it.

This aim is solved by the features of claim 1 and claim 9. Other embodiments of the invention are object of the dependent claims.

According to the invention the fiber reinforced plastic-structure comprises at least two single elements. The elements are used to build up the shape of the structure. The two adjacent elements are connected via its contact-surfaces by an applied glue or resin. A mat is located between the contact-surfaces before the glue or resin is used to connect the elements. The mat comprises chopped fibers, which are oriented in a random manner.

So the used mat is a so called "Chopped Strand Mat, CSM".

The random orientation of the fibers in the mat prevents formation and propagation of cracks in an unbroken path in the connection zone. So a strong and robust connection of the elements is achieved - which is a great advantage compared to prior art, where two surfaces are connected by the use of glue-paste or the like and where cracks are likely to form and evolve in an unbroken path.

In a preferred embodiment the fiber reinforced plastic-structure is used to build up a blade of a wind-turbine preferably.

The glue or resin is applied by help of the known VART-method in a preferred embodiment.

It is possible to apply the VART-method to the elements of the fiber reinforced plastic-structure to create a single reinforced fiber reinforced plastic-structure.

It is also possible to arrange the elements of the fiber reinforced plastic-structure together with other components of a wind-turbine-blade for example into moulds and to apply the VART-method to the whole blade-structure. So the elements of the fiber reinforced plastic-structure are integrated into the blade-sandwich-structure. The elements are connected together and are also connected with the other used components of the blade by applying a single VARTM-process to the whole blade.

In a preferred embodiment the mat comprises fibers, which are made of a pre-impregnated laminate, a so called "pre-preg". For this purpose glass fibers, carbon fibers or other possible fibers are impregnated with an epoxy resin, while the resin is destined to cure at a predetermined temperature.

Because of the invention a glue-bond with a high quality is obtained. The glue-bond shows a very high "Inter Laminar Shear Strength, ILSS".

According to the invention the used mat comprises cut fibers with a random orientation. The mat is impregnated with epoxy and is placed in a bond-zone between two elements or parts. So a good bond-zone with an improved ILSS-value is achieved.

In a preferred embodiment the random oriented fibers show a length from 5 mm up to 50 mm, while they are impregnated with a heat curing epoxy resin.

Due to the invention it is also possible, to control the thickness and the quality of the bond-zone very easily. As the pre-impregnated CSM material is used as a mat, air-bubbles and voids along the bond-line or within the bond-zone are reduced.

The invention will be described in more detail by help of some drawings.
- FIG 1: shows different types of fiber-layouts being used to build up a fiber reinforced plastic-structure,
- FIG 2: shows a possibility to produce a mat being used accord- ing to the invention,
- FIG 3: shows a cross-section of a blade, comprising a number of elements, which are connected according to the in- vention,
- FIG 4: shows a method to use the mat according to the inven- tion during a blade-production-process.

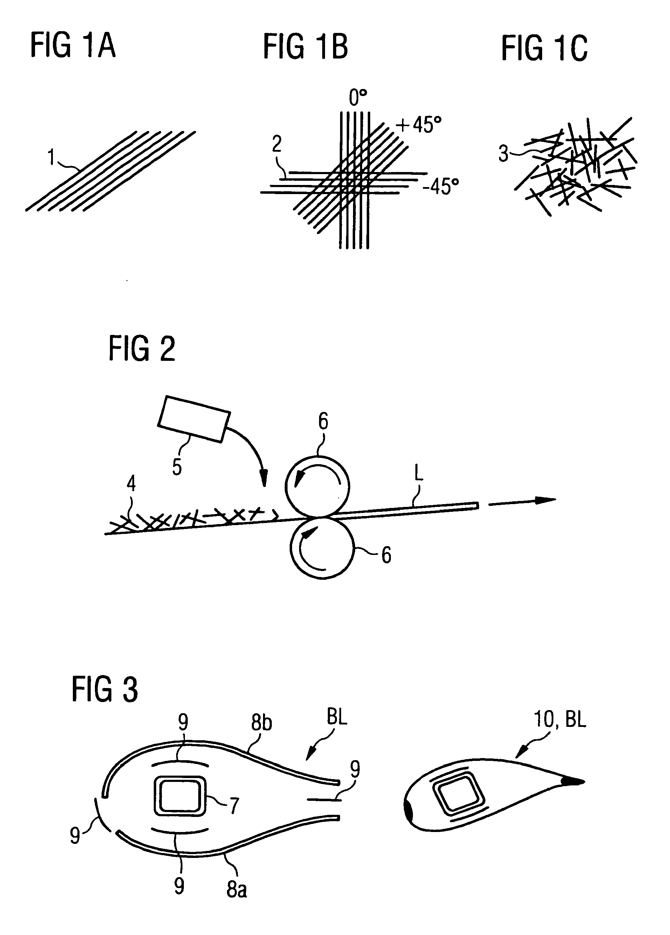

FIG 1A shows a unidirectional laminate 1, comprising a number of fibers, which are aligned in a parallel direction. The laminate shows therefore a high specific stiffness along its length.

The laminate 1 shows a very smooth surface, which might lead to an impaired inter laminar shear strength value for a glue connection to the final laminate 1.

FIG 1B shows a multidirectional laminate 2, comprising a first number of fibers, which are aligned in a 0° direction. A second number of fibers are controlled aligned in a +45° direction while a third number of fibers are controlled aligned in a -45° direction.

The resulting laminate 2 shows an improved specific stiffness in the relevant directions 0°, +45° and -45°.

The laminate 2 shows a very smooth surface, which might lead to an impaired inter laminar shear strength value for a glue connection to the final laminate 2.

FIG 1C shows a laminate 3, comprising random-oriented, cut fibers. These fibers are forming a mat.

According to the invention the mat will be located especially between smooth surfaces of two adjacent and in some cases pre-fabricated elements.

This mat is named "chopped strand mat, CSM".

FIG 2 shows a possibility to produce a mat being used according to the invention.

Short-cut fibers 4 are brought onto a carrier, while the fibers 4 show a random-orientation.

The fibers 4 are combined with a heat-curing resin 5.

The fibers 4 and the resin are guided between two rotating elements 6, which are used to create the mat, being used for the invention.

For example pressure is applied to the combined fibers and resin.

In a preferred embodiment a plastic protective liner is also applied on each side of the mat (not shown in detail). This product is known as "pre-preg".

The plastic liner is used to protect the mat, as long as it is on stock. The liners are removed later, when the mat is destined to be used.

Due to this a pre-impregnated mat or laminate L is created, comprising short-cut and random oriented fibers 4 and resin 5, while the mat L is sealed by protection plastic liners. FIG 3 shows a cross-section of a blade BL, comprising a number of elements, which are connected according to the invention.

For example a pre-casted beam 7 is located in the middle of the blade BL, while two pre-casted blade-shells 8a, 8b are forming an outer shape of the blade BL.

A lower blade-shell 8a needs to be connected with an upper blade-shell 8b. According to the invention pre-impregnated mats 9 are located between the two shells 8a, 8b.

Accordingly the pre-casted beam 7 needs to be connected with the lower blade-shell 8a and the upper blade-shell 8b. According to the invention pre-impregnated mats 9 are located between the two shells 8a, 8b and the pre-casted beam 7.

In a preferred embodiment the used CSM-prepreg-mats are placed by a robot-device or by hand in the dedicated positions.

All the parts of the blade BL are pressed together and vacuum may be applied to enforce the connection.

Next heat is applied to the structure, so the applied resin of the mat is allowed to cure. So the applied CSM-prepreg-mats connect the described parts of the blade BL, as shown as completed blade 10 on the right side of FIG 3.

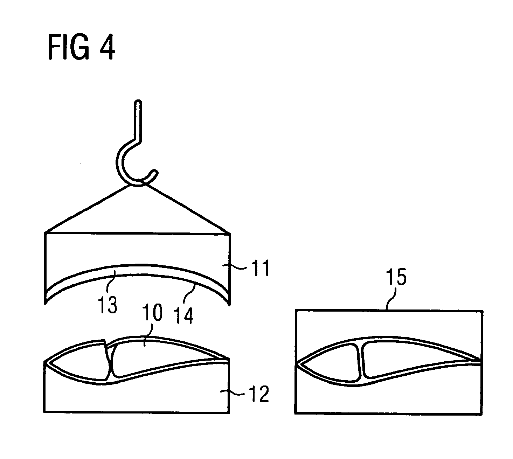

FIG 4 shows a method to use the mat according to the invention during a blade-production-process. The blade is shown in a cross-sectional-view.

A number of dry fiber-laminates are placed into a lower mould 12, forming a dry main structure of the blade.

Additionally other components may be put onto the lower mould 12 to form a three-dimensional-shape of the blade. These components may comprise for example dry laminates or mats, pre-fabricated components or layers of balsa-wood, etc.

The cross-sectional view of the blade in FIG 4 shows exemplary a web as an additional component, while the web is located in a middle section of the blade in a vertical position.

According to the invention CSM-mats are located between relevant surfaces of adjacent components.

Another number of dry fiber-laminates 13, holding the rest of the dry blade laminate, needs to be placed on top of the main blade structure.

For this an upper mould 11 is used. While the upper mould 11 is placed on the floor with its concavity in upward direction, a vacuum liner 14 comprising a layer of CSM-prepreg is placed to cover the dry fiber-laminates 13.

Vacuum is applied under the liner 14 and therefore it is possible to lift the upper mould 11 with the stack of reinforcement laminate 13 and rotate it around its length axis, enabling it to be placed accurately over the lower mould 12.

The upper mould 11 and the lower mould 12 are connected.

All the parts or components within the enclosed moulds are pressed together - vacuum may be applied to enforce the structure.

Vacuum for the VARTM-process is applied and resin is infused into the blade-structure. Subsequently heat is applied to the moulds to cure the resin and to cure the CSM-pre-preg-mat to finish the blade.

## Claims

1. Fiber reinforced plastic-structure,
- where the structure comprises at least two single elements, being used to build up the shape of the structure,
- where the two adjacent elements are connected via its contact-surfaces by an applied glue or resin,
**characterized in,**
- **that** a mat is located between the contact-surfaces before the glue or resin is used to connect the elements, and
- **that** the mat comprises chopped fibers, which are oriented in a random manner.

2. Fiber reinforced plastic-structure according to claim 1, where the resin is applied as glue to the mat by help of a vacuum assisted resin transfer method.

3. Fiber reinforced plastic-structure according to claim 1 or claim 2, where the fibers of the mat are made of a laminate, which is impregnated with a heat curing epoxy resin, while the resin is destined to cure at a predetermined temperature.

4. Fiber reinforced plastic-structure according to claim 1, where the fibers of the mat are made of glass or carbon.

5. Fiber reinforced plastic-structure according to claim 1, where the fibers show an individual length of 5 mm up to 50 m.

6. Method to build up a fiber reinforced plastic-structure,
- where at least two elements are sued to build up the fiber reinforced plastic-structure,
- two adjacent elements are connected via its contact-surfaces by an applied glue or resin,
**characterized in,**
- **that** a mat is used to connect the elements by help of an resin or glue, while the mat is located between the contact-surfaces before the glue or resin is used, and
- while the mat comprises chopped fibers, which are oriented in a random manner.

7. Method according to claim 6, where a vacuum assisted resin transfer method is used to apply resin as glue to the mat.

8. Method according to claim 6, where the fibers of the mat are made of a laminate, which is impregnated with a heat curing epoxy resin, while the resin is destined to cure at a predetermined temperature.

9. Method according to claim 6, where the fibers of the mat are made of glass or carbon.

10. Method according to claim 6, where the fibers show an individual length of 5 mm up to 50 m.

11. Method according to one of the claims 6 to 10,
- where the fiber reinforced plastic-structure is used to build up a structure of a blade of a wind turbine,
- while the fiber reinforced plastic-structure comprises a pre-casted beam and at least two pre-casted blade-shells,
- while the mats are located between the blade-shells and between the beam and the blade-shells,
- where the vacuum assisted resin transfer method is applied to the fiber reinforced plastic-structure.

12. Method according to one of the claims 6 to 10,
- where the elements of the fiber reinforced plastic-structure, the mats for its connection and other components of a wind-turbine-blade are arranged into a cavity, which encloses the blade-structure,
- while the resin is applied to the enclosed cavity by help of a vacuum assisted resin transfer method,
- so the elements, the mats and the components of the blade are connected in a single step by the applied vacuum assisted resin transfer method.

## Patentansprüche

1. Faserverstärkte Kunststoffstruktur,
- wobei die Struktur mindestens zwei einzelne Elemente umfasst, die verwendet werden, um die Form der Struktur aufzubauen,
- wobei die beiden benachbarten Elemente über ihre Kontaktflächen durch einen aufgebrachten Klebstoff oder ein aufgebrachtes Harz verbunden sind,
**dadurch gekennzeichnet,**
- **dass** eine Matte zwischen den Kontaktflächen angeordnet wird, bevor der Klebstoff oder das Harz verwendet wird, um die Elemente zu verbinden, und
- **dass** die Matte Kurzfasern umfasst, welche auf eine zufällige Weise ausgerichtet sind.

2. Faserverstärkte Kunststoffstruktur nach Anspruch 1, wobei das Harz mithilfe eines vakuumunterstützten Harzübertragungsverfahrens (Vacuum Assisted Resin Transfer Method) als Klebstoff auf die Matte aufgebracht wird.

3. Faserverstärkte Kunststoffstruktur nach Anspruch 1 oder Anspruch 2, wobei die Fasern der Matte aus einem Laminat hergestellt sind, welches mit einem wärmehärtenden Epoxidharz getränkt ist, wobei das Harz dazu bestimmt ist, bei einer vorgegebenen Temperatur auszuhärten.

4. Faserverstärkte Kunststoffstruktur nach Anspruch 1, wobei die Fasern der Matte aus Glas oder Kohlenstoff hergestellt sind.

5. Faserverstärkte Kunststoffstruktur nach Anspruch 1, wobei die Fasern eine Einzellänge von 5 mm bis 50 m aufweisen.

6. Verfahren zum Aufbauen einer faserverstärkten Kunststoffstruktur,
- wobei mindestens zwei Elemente verwendet werden, um die faserverstärkte Kunststoffstruktur aufzubauen,
- wobei zwei benachbarte Elemente über ihre Kontaktflächen durch einen aufgebrachten Klebstoff oder ein aufgebrachtes Harz verbunden sind,
**dadurch gekennzeichnet,**
- **dass** eine Matte verwendet wird, um die Elemente mithilfe eines Harzes oder Klebstoffes zu verbinden, wobei die Matte zwischen den Kontaktflächen angeordnet wird, bevor der Klebstoff oder das Harz verwendet wird, und
- wobei die Matte Kurzfasern umfasst, welche auf eine zufällige Weise ausgerichtet sind.

7. Verfahren nach Anspruch 6, wobei ein vakuumunterstütztes Harzübertragungsverfahren angewendet wird, um Harz als Klebstoff auf die Matte aufzubringen.

8. Verfahren nach Anspruch 6, wobei die Fasern der Matte aus einem Laminat hergestellt sind, welches mit einem wärmehärtenden Epoxidharz getränkt ist, wobei das Harz dazu bestimmt ist, bei einer vorgegebenen Temperatur auszuhärten.

9. Verfahren nach Anspruch 6, wobei die Fasern der Matte aus Glas oder Kohlenstoff hergestellt sind.

10. Verfahren nach Anspruch 6, wobei die Fasern eine Einzellänge von 5 mm bis 50 m aufweisen.

11. Verfahren nach einem der Ansprüche 6 bis 10,
- wobei die faserverstärkte Kunststoffstruktur verwendet wird, um eine Struktur eines Rotorblattes einer Windkraftanlage aufzubauen,
- wobei die faserverstärkte Kunststoffstruktur einen vorgegossenen Träger und mindestens zwei vorgegossene Rotorblattschalen umfasst,
- wobei die Matten zwischen den Rotorblattschalen und zwischen dem Träger und den Rotorblattschalen angeordnet sind,
- wobei das vakuumunterstützte Harzübertragungsverfahren auf die faserverstärkte Kunststoffstruktur angewendet wird.

12. Verfahren nach einem der Ansprüche 6 bis 10,
- wobei die Elemente der faserverstärkten Kunststoffstruktur, die Matten für ihre Verbindung und andere Komponenten eines Windkraftanlagen-Rotorblattes in einem Hohlraum angeordnet werden, welcher die Rotorblattstruktur umschließt,
- wobei das Harz mithilfe eines vakuumunterstützten Harzübertragungsverfahrens in den umschlossen Hohlraum eingebracht wird,
- sodass die Elemente, die Matten und die Komponenten des Rotorblattes durch das angewendete vakuumunterstützte Harzübertragungsverfahren in einem einzigen Schritt verbunden werden.

## Revendications

1. Structure en plastique renforcée par des fibres,
- où la structure comprend au moins deux éléments simples, qui sont utilisés pour constituer la forme de la structure,
- où les deux éléments adjacents sont reliés via leurs surfaces de contact par une colle ou une résine appliquée,
**caractérisée en ce**
- **qu'**un mat est positionné entre les surfaces de contact avant d'utiliser la colle ou la résine pour relier les éléments, et
- **que** le mat comprend des fibres coupées, qui sont orientées de manière aléatoire.

2. Structure en plastique renforcée par des fibres selon la revendication 1, où la résine est appliquée en tant que colle sur le mat à l'aide d'un procédé de transfert de résine assisté sous vide.

3. Structure en plastique renforcée par des fibres selon la revendication 1 ou la revendication 2, où les fibres du mat sont constituées d'un stratifié, qui est imprégné avec une résine époxy thermodurcissable, tandis que la résine est destinée à durcir à une température prédéterminée.

4. Structure en plastique renforcée par des fibres selon la revendication 1, où les fibres du mat sont constituées de verre ou de carbone.

5. Structure en plastique renforcée par des fibres selon la revendication 1, où les fibres présentent une longueur individuelle de 5 mm jusqu'à 50 m.

6. Procédé pour constituer une structure en plastique renforcée par des fibres,
- où au moins deux éléments sont utilisés pour constituer la structure en plastique renforcée par des fibres,
- deux éléments adjacents sont reliés via leurs surfaces de contact par une colle ou une résine appliquée,
**caractérisé en ce**
- **qu'**un mat est utiliser pour relier les éléments à l'aide d'une résine ou d'une colle, tandis que le mat est positionné entre les surfaces de contact avant d'utiliser la colle ou la résine, et
- tandis que le mat comprend des fibres coupées, qui sont orientées de manière aléatoire.

7. Procédé selon la revendication 6, où un procédé de transfert de résine assisté sous vide est utilisé pour appliquer la résine en tant que colle sur le mat.

8. Procédé selon la revendication 6, où les fibres du mat sont constituées d'un stratifié, qui est imprégné avec une résine époxy thermodurcissable, tandis que la résine est destinée à durcir à une température prédéterminée.

9. Procédé selon la revendication 6, où les fibres du mat sont constituées de verre ou de carbone.

10. Procédé selon la revendication 6, où les fibres présentent une longueur individuelle de 5 mm jusqu'à 50 m.

11. Procédé selon l'une des revendications 6 à 10,
- où la structure en plastique renforcée par des fibres est utilisée pour constituer une structure d'une pale d'une éolienne,
- tandis que la structure en plastique renforcée par des fibres comprend une poutre préfabriquée et au moins deux coques de pale préfabriquées,
- tandis que les mats sont positionnés entre les coques de pale et entre la poutre et les coques de pale,
- où le procédé de transfert de résine assisté sous vide est appliqué à la structure en plastique renforcée par des fibres.

12. Procédé selon l'une quelconque des revendications 6 à 10,
- où les éléments de la structure en plastique renforcée par des fibres, les mats pour sa liaison et d'autres composants d'une pale d'éolienne sont agencés dans une cavité qui renferme la structure de la pale,
- tandis que la résine est appliquée dans la cavité incluse à l'aide d'un procédé de transfert de résine assisté sous vide,
- ainsi les éléments, les mats et les composants de la pale sont reliés en une seule étape par le procédé de transfert de résine assisté sous vide.
